# EUROPÄISCHE PATENTSCHRIFT

(11) **EP 1 051 592 B1**
(45) Veröffentlichungstag und Bekanntmachung des Hinweises auf die Patenterteilung: **08.01.2003**
(21) Anmeldenummer: 99947070.1
(22) Anmeldetag: 27.01.1999
(51) Int. Cl.: F41H 5/04

(54) **SICHERHEITSGLASAUFBAU FÜR SICHERHEITSKRAFTFAHRZEUGE**
SAFETY GLASS CONSTRUCTION FOR SAFETY MOTOR VEHICLES
CONSTRUCTION DE VERRE DE SECURITE POUR VEHICULE AUTOMOBILE

(30) Priorität: 29.01.1998 DE 19803435
(43) Veröffentlichungstag der Anmeldung: 15.11.2000
(73) Patentinhaber: Sachsenring Entwicklungsgesellschaft mbH, 08058 Zwickau (DE)
(72) Erfinder: ACKERMANN, Jörg, D 08058 Zwickau (DE)
(74) Vertreter: Rumrich, Gabriele
(86) Internationale Anmeldenummer: DE9900251
(87) Internationale Veröffentlichungsnummer: WO99039152

(56) Entgegenhaltungen:
- EP-A- 0 658 738
- WO-A-98/57805
- DE-A- 4 142 416
- DE-A- 4 230 073
- DE-A- 4 314 092
- DE-A- 4 415 879
- DE-A- 19 745 248
- DE-C- 19 729 897
- GB-A- 2 144 834
- US-A- 3 616 122
- US-A- 4 277 294
- US-A- 4 284 677

## Beschreibung

Die Erfindung betrifft einen Sicherheitsglasaufbau für Sicherheitskraftfahrzeuge, nach dem Oberbegriff des ersten Patentanspruchs, die eine gepanzerte Scheibe aufweisen und deren Karosserieteile in Richtung zum Fahrgastraum mit beschußsicheren Matten oder anderem beschußsicheren Materialien ausgekleidet sind. Es sind zahlreiche Lösungen zum Aufbau von Sicherheitsscheiben für Kraftfahrzeuge bekannt, wobei meist mehrere Verbundscheiben aus Sicherheitsglas zusammengesetzt werden, zwischen denen Folien oder fluidgefüllte Zwischenräume vorgesehen sind und eine oder mehrere Schichten aus Polycarbonatglas bestehen können (DE 43 36 321 A1, DE 195 48 338 A1, EP 302 959 A1).

In DE 36 39 781 C1 wird eine Panzerglasscheibe in Stufenglasausführung beschrieben, die an ihrer oberen Kante in Richtung zum Fahrzeuginnenraum abgeschrägt ist und , wobei die sich dadurch bildende Keilfuge mittels einer im Innenraum angeordneten Panzerplatte überdeckt ist. Die Panzerplatte ist dabei nicht an der Panzerscheibe befestigt. Die Halterung und Führung der Panzerglasscheibe bildet ein Rahmenprofil, welches die Panzerglasscheibe von oben, vorn und hinten begrenzt und als komplexes Bauteil ausgebildet ist. Das Rahmenprofil weist ein Ergänzungsprofil auf, das einen im wesentlichen U-förmigen Querschnitt hat und den Rand der Panzerglasscheibe umfaßt. In DE 41 42 416 A1 wir eine aus Panzerglas bestehende Fensterscheibe für Kraftfahrzeuge beschrieben, die im Randbereich ein längs des Randes verlaufendes Panzerelement in Form eines Winkels trägt. Der Winkel grenzt dabei mit einem an der Stirnseitenfläche der Scheibe anliegenden Schenkel an einen in Richtung zur Außenseite des Fahrzeugs weisenden Vorsprung der Scheibe an, und der andere Winkel liegt an der Fahrzeuginnenseite. Beide Lösungen weisen einen hohen konstruktiven Aufbau auf, da diese U-förmigen oder Winkelförmigen Profile genau dem gekrümmten Verlauf der Stirnfläche der Panzerscheibe folgen müssen. Weiterhin ist es in beiden Fällen notwendig, das im Innenraum des Fahrzeuges vorgesehene beschußsichere Material über den Randbereich des Sicherheitsglases zu führen um auch in einem steilen Winkel auftreffende Projektile nicht in den Fahrzeuginnenraum eindringen zu lassen.

Es sind weiterhin Lösungen bekannt, welche das Auskleiden der Karosserieteile und deren Hohlräume mit beschußsicheren Materialien betreffen. In DE 195 43 127 A1 wird eine Lösung zu beschußsicheren Matten, insbesondere zum Abdecken von Fahrzeugwandungen beschrieben, bei welcher die beschußsichere Matte aus mehreren miteinander verbundenen Kunststoff-Gewebeschichten besteht.

Gemäß DE 196 01 982 C1 werden auch Hohlräume mit den Abmessungen der Hohlräume angepaßten flexiblem Profil aus beschußsicherem Material versehen. Dabei besteht ein grundlegendes Problem darin, daß insbesondere der Randbereich der Außenscheibe bis zum Randbereich der sich anschließenden Sicherheitsscheibenpaketes ungeschützt ist.

Daher muß das beschußsichere Material im Fahrgastraum über den Bereich des Sicherheitsscheibenpaketes geführt werden, um die notwendige Sicherheit zu gewährleisten. Dazu wird in G 92 05 520.6 U1 ein Kraftfahrzeug mit gepanzerter Scheibe beschrieben, bei welchem zum Schutz des Innenraumes in dem Bereich, in dem die Panzerglasscheibe eine verringerte Dicke aufweist, eine überlappende gepanzerte Fugenabdeckung vorgesehen. Dadurch wird jedoch der Einstieg verkleinert und somit das Einsteigen in das Fahrzeug beeinträchtigt. Weiterhin erfordert dies einen sehr hohen kostenmäßigen Aufwand bei der Fertigung der Formteile aus dem beschußsicheren Material, da die Werkzeuge relativ groß ausgebildet sein müssen.

In der DE 44 15 879 C2, welche die Grundlage fürden Oberbegriff des Anspruches 1 bildet, wird eine aus Panzerglas bestehende Scheibe für Kraftfahrzeuge beschrieben, die in einer Randstufe ein Panzerelement in Form eines Winkels trägt, dessen einer Schenkel an der Stirnseite anliegt und dessen anderer Schenkel parallel zur Fensterscheibe verläuft und ein Stahlelement der Karosserie überlappt.

Der Erfindung liegt die Aufgabe zugrunde, einen Sicherheitsglasaufbau für Sicherheitskraftfahrzeuge zu entwickeln, der die Beschußsicherheit im Randbereich des Außenglases gewährleistet, ohne das beschußsichere Material des Fahrgastraumes bis an das Sicherheitsscheibenpaket heranzuführen und somit eine Beeinträchtigung des Einstieges zu vermeiden und gleichzeitig die Kosten für die Herstellung der Sicherheitsscheiben und der beschußsicheren Auskleidungen zu verringern.

Diese Aufgabe wird erfindungsgemäß mit den Merkmalen des ersten Patentanspruchs und den weiteren Merkmalen in dessen Unteransprüchen gelöst. Dabei ist die Außenscheibe bekannter Weise mit mindestens einer Scheibe aus Panzerglas oder einem Scheibenpaket aus mindestens zwei Verbundscheiben aus Panzerglas gepanzert. Außerdem ist an der gepanzerten Scheibe ein Element aus beschußsicherem Material angeordnet.

Erfindungsgemäß ist das Element als Streifen ausgebildet, der zwischen der Außenscheibe und der Scheibe aus Panzerglas bzw. dem Scheibenpaket und/oder zwischen mindestens zwei Scheiben des Scheibenpaketes angeordnet ist und über das Scheibenpaket oder die Außenscheibe derart hinausragt, daß er den Bereich zwischen dem Randbereich der Scheibe aus Panzerglas bzw. des Randbereich des Scheibenpaketes bis zu beschußsicheren Matten oder dem beschußsicheren Material der sich an das Scheibenpaket anschließenden Karosserieteile überlappt. Als Streifenmaterial wird vorzugsweise eine Stahleinlage z.B. aus Panzerstahl, beschußhemmende Keramik oder ein anderes beschußhemmendes Material gewählt.

Um die Panzerung von außen nicht sichtbar werden zu lassen, kann der Streifen durch eine innenseitig auf die Außenscheibe aufgebrachte Beschichtung überdeckt werden. Die Außenscheibe kann entweder aus Sicherheitsglas (Panzerglas) oder auch aus original ESG-Glas bestehen.

Die Erfindung wird nachfolgend anhand von Ausführungsbeispielen und zugehörigen Zeichnungen näher erläutert.

Es zeigen:
- Fig. 1:: beschußsicherer Streifen zwischen Außenglas und Scheibenpaket
- Fig. 2:: beschußsicherer Streifen zwischen zwei Scheiben des Scheibenpaketes
- Fig. 3a:: In Richtung zu den beschußsicheren Matten einfach gebogener Streifen
- Fig. 3b:: In Richtung zu den beschußsicheren Matten Z-förmig gebogener Streifen

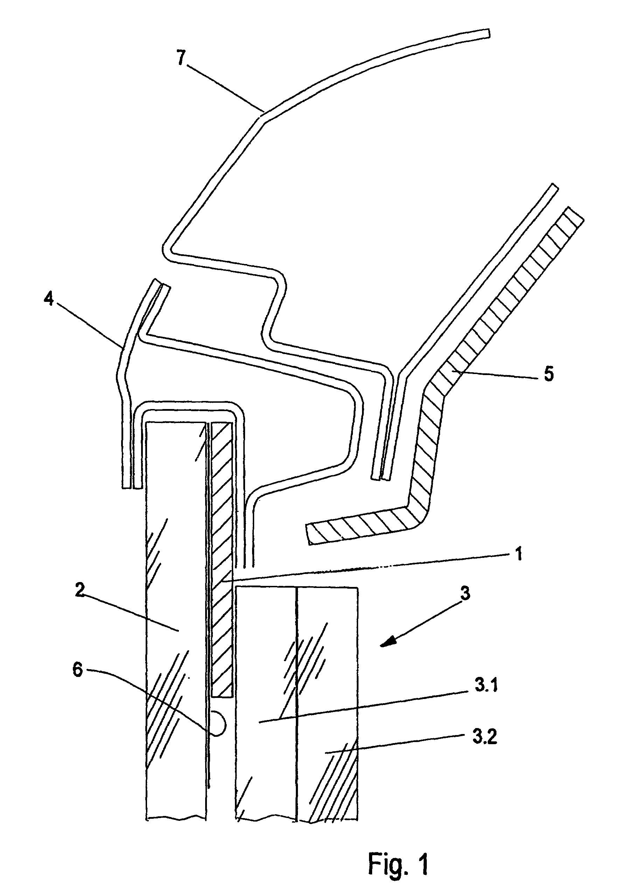

In Fig. 1 ist ein in einer Fahrzeugtür 4 angeordneter Sicherheitsglasaufbau dargestellt. Dabei ist zwischen der in der Fahrzeugtür 4 befestigten Außenscheibe 2 und dem aus mehreren Scheiben 3.1 und 3.2 bestehenden Scheibenpaket 3 ein beschußhemmender Streifen 1 im Randbereich der Außenscheibe 2 angeordnet. Dadurch ist es nicht mehr notwendig, die im sich anschließenden Karosserieteil 7 angeordnete beschußsichere Matte 5 bis über den Randbereich des Scheibenpaketes 3 zu führen. Es genügt für die Vermeidung des Durchdringens eines Projektils, wenn sich der Streifen 1 und die Matte 5 genügend überlappen. Der Streifen 1 ist dabei vorzugsweise aus Panzerstahl oder beschußsicherer Keramik ausgebildet.

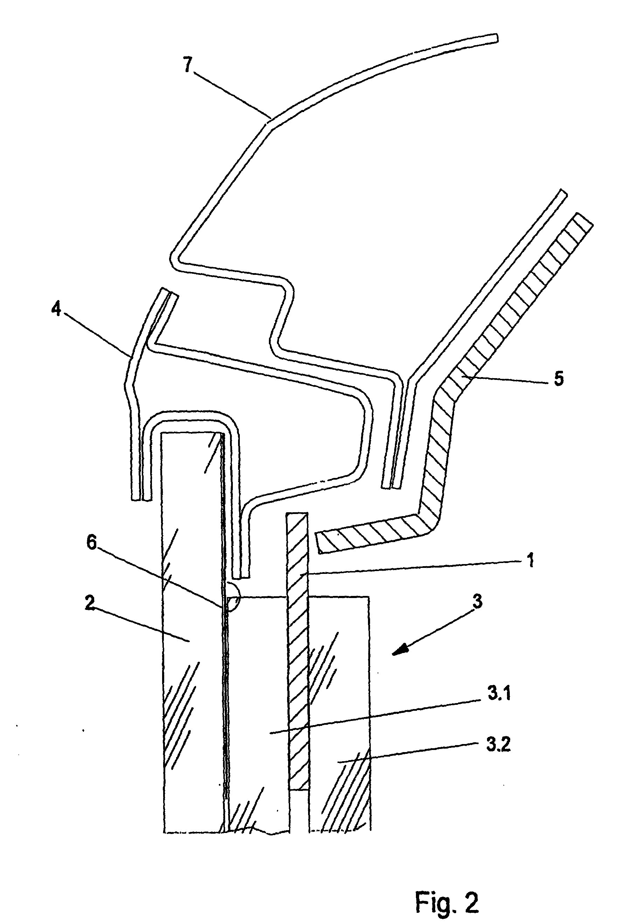

In einer weiteren Ausführungsvariante gem. Fig. 2 wurde der Streifen 1 zwischen zwei Scheiben 3.1 und 3.2 des Scheibenpaketes 3 angeordnet und kann somit in die Herstellung des Scheibenpaketes eingebunden werden. Der Streifen 1 überragt den Randbereich des Scheibenpaketes so, daß eine genügende Überlappung mit dem Panzerungselement 5 (z. B. beschußhemmende Matte) im Karosseriebereich des Fahrzeuges gegeben ist.

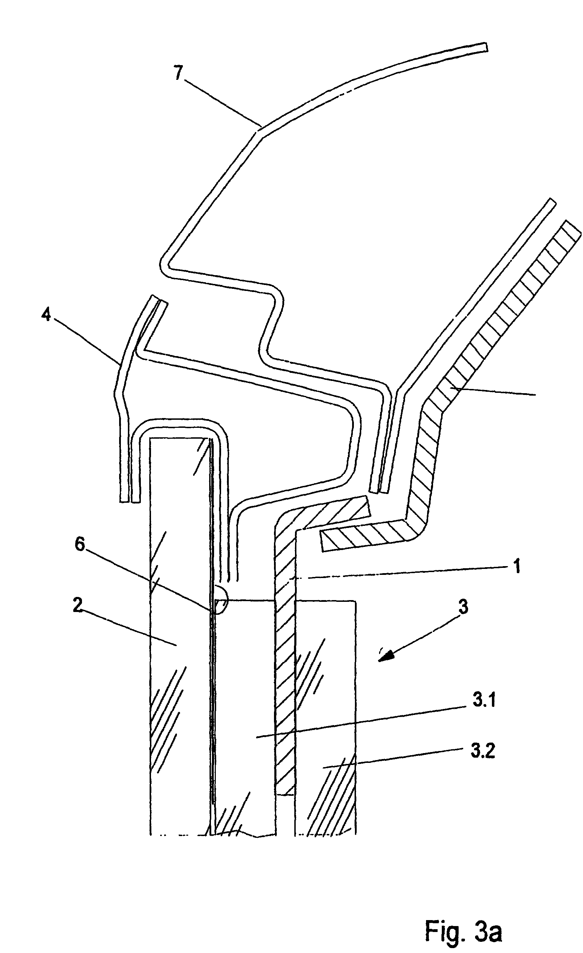

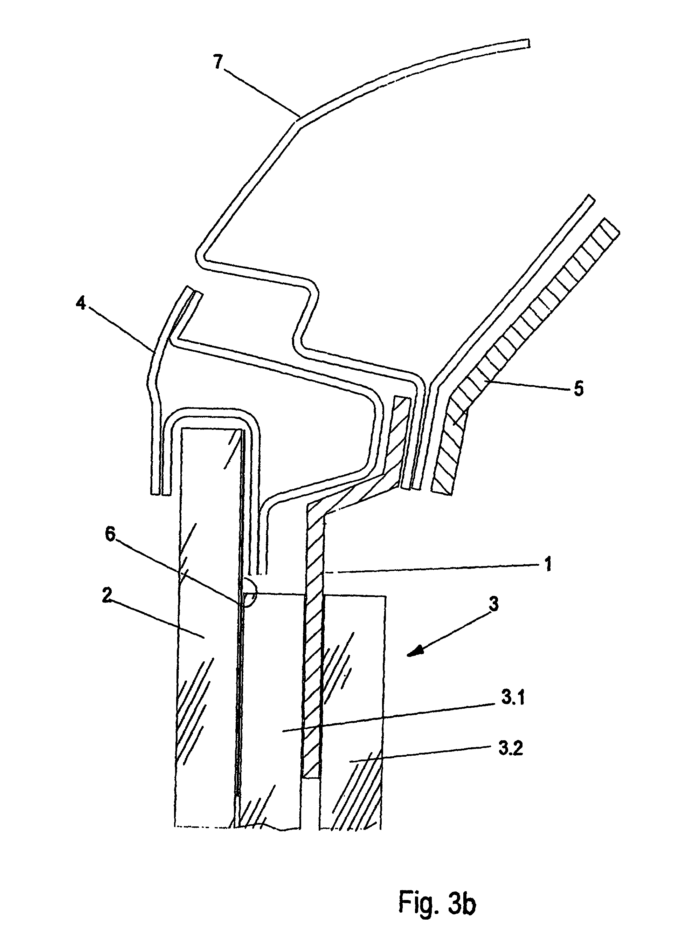

Eine in Fig. 3a und 3b dargestellte Ausführungsmöglichkeit besteht darin, den Streifen 1 bereichsweise in Richtung zum Panzerungselement 5 umzubördeln bzw. umzubiegen. In Fig. 3a ist dabei eine Variante mit einer einfachen Biegung des Streifens 1 in Richtung zum Fahrgastraum dargestellt. Bei dieser Ausführungsvariante wird ein Öffnen der Fensters verhindert, was bei einigen Typen von Sicherheitsfahrzeugen gefordert wird. Es besteht auch die Möglichkeit, den Streifen Z-förmig gem. Fig. 3b zu biegen, d.h. eine Biegung ist in Richtung zum Fahrgastraum und die zweite Biegung von der Scheibe weg gerichtet. Der Streifen 1 kann in diesem Fall erstmalig den Randbereich der Scheibe überragen.

In diesem Fall können die Außenmaße des Panzerungsmaterials 5 bzw. der beschußsicheren Matten weiter reduziert werden.

Der Streifen 1 ist vorzugsweise umlaufend ausgebildet, es besteht jedoch auch die Möglichkeit nur drei Seiten mit dem Streifen 1 zu versehen oder den Streifen auch nur bereichsweise anzuordnen.

Mit der erfindungsgemäßen Lösung wird eine Projektildurchdringung im Randbereich des Außenglases ausgeschlossen, ohne das beschußsichere Material des Fahrgastraumes bis an das Sicherheitsscheibenpaket heranführen zu müssen. Eine Beeinträchtigung des Einstieges wird somit vermieden wobei gleichzeitig die Kosten für die Herstellung der beschußsicheren Auskleidungen verringert werden. Gleichzeitig wird der Aufwand zur Herstellung der Scheiben verringert, da der Streifen nicht mehr als Profil an der Stirnseite der Scheibe entlang läuft, sondern einfach zwischen zwei Scheiben angeordnet ist.

Wie aus den Zeichnungen ersichtlich ist, kann der Streifen 1 durch eine Beschichtung 6 der Scheibe 2 verdeckt werden.

## Patentansprüche

1. Sicherheitsglasaufbau für Sicherheitskraftfahrzeuge, mit einer gepanzerten Scheibe, bei welcher mindestens eine aus Sicherheitsglas bestehende Scheibe (3.1) oder ein Scheibenpaket aus mindestens zwei aus Sicherheitsglas bestehenden Verbundscheiben (3.1, 3.2) mit einer Außenscheibe (2) verbunden ist, einem Element aus beschußsicherem Material, das an der gepanzerten Scheibe angeordnet ist, und beschußsicheren Matten oder beschußsicherem Material, mit dem die Karosserieteile in Richtung zum Fahrgastraum ausgekleidet sind, **dadurch gekennzeichnet, daß** das Element als Streifen (1) ausgebildet ist, der zwischen der Außenscheibe (2) und der Scheibe aus Panzerglas bzw. dem Scheibenpaket (3) und/oder zwischen mindestens zwei Scheiben (3.1, 3.2) des Scheibenpaketes (3) angeordnet ist und über das Scheibenpaket oder die Außenscheibe derart hinausragt, daß er den Bereich zwischen der gepanzerten Scheibe und den beschußsicheren Matten oder beschußsicherem Material überlappt.

2. Sicherheitsglasaufbau nach Anspruch 1, **dadurch gekennzeichnet, daß** der das Scheibenpaket (3) überragende Außenbereich des Streifens (1) bereichsweise in Richtung zur beschußsicheren Matte (5) oder dem beschußsicheren Material der sich anschließenden Karosserieteile (7) unter Blockierung des Fensteröffnens in Richtung zum Fahrgastraum umgebogen oder umgebördelt ist.

3. Sicherheitsglasaufbau nach Anspruch 1, **dadurch gekennzeichnet, daß** der das Scheibenpaket (3) oder die Außenscheibe (2) überragende Außenbereich des Streifens (1) bereichsweise in Richtung zur beschußsicheren Matte (5) oder dem beschußsicheren Material der sich anschließenden Karosserieteile (7) unter Freigabe des Fensteröffnens Z-förmig umgebogen oder umgebördelt ist.

4. Sicherheitsglasaufbau nach einem der Ansprüche von 1 bis 3, **dadurch gekennzeichnet, daß** der Streifen aus Panzerstahl oder beschußsicherer Keramik besteht.

5. Sicherheitsglasaufbau für Sicherheitskraftfahrzeuge nach einem der Ansprüche 1 bis 4, **dadurch gekennzeichnet, daß** der Streifen (1) durch eine Beschichtung (6) überdeckbar ist.

## Claims

1. A security glass arrangement for security vehicles, having a bullet-proof pane in which at least one pane (3.1) consisting of security glass or package of panes consisting of at least two composite panes (3.1, 3.2) made of security glass are connected with an outside pane (2), a member made of bullet-proof material which is disposed on the armored pane, and bullet-proof mats or bullet-proof material with which the car body parts are lined in the direction towards the passenger compartment, **characterized in that** the member is arranged as a strip (1) which is arranged between the outside pane (2) and the pane made of security glass or the package of panes (3) and/or between at least two panes (3.1, 3.2) of the package of panes (3) and projects beyond the package of panes or the outside pane in such a way that it overlaps the region between the armored pane and the bullet-proof mats or bullet-proof material.

2. A security glass arrangement as claimed in claim 1, **characterized in that** the outside region of the strip (1) which projects beyond the package of panes (3) is bent over or edge-formed in sections in the direction towards the bullet-proof mat (5) or the bullet-proof material of adjacent car body parts (7) by blocking the opening of the window in the direction towards the passenger compartment.

3. A security glass arrangement as claimed in claim 1, **characterized in that** the outside region of the strip (1) which projects beyond the package of panes (3) or the outside pane (2) is bent over or edge-form in a Z-shaped fashion in sections in the direction towards the bullet-proof mat (5) or the bullet-proof material of the adjacent car body parts (7) by releasing the window opening.

4. A security glass arrangement as claimed in one of the claims 1 to 3, **characterized in that** the strip is made of armor steel or bullet-proof ceramic material.

5. A security glass arrangement for security vehicles as claimed in one of the claims 1 to 4, **characterized in that** the strip (1) can be covered by a coating (6).

## Revendications

1. Construction en verre de sécurité pour véhicules automobiles de sécurité avec une vitre blindée dans laquelle au moins une vitre (3.1) en verre de sécurité ou une vitre en verre feuilleté composée d'au moins deux plaques composite en verre de sécurité (3.1, 3.2) sont reliées à une vitre extérieure (2), avec un élément en un matériau à l'épreuve des balles disposé sur la vitre blindée, et avec des nattes ou un matériau à l'épreuve des balles qui habillent les pièces de carrosserie sur leur face tournée vers l'habitacle, **caractérisée en ce que** l'élément est réalisé sous forme de bande (1) disposée entre la vitre extérieure (2) et la vitre en verre blindé ou la vitre en verre feuilleté (3) et/ou entre au moins deux plaques (3.1, 3.2) de la vitre en verre feuilleté (3) et dépassant la vitre en verre feuilleté ou la vitre extérieure de telle sorte qu'elle recouvre partiellement la zone située entre la vitre blindée et les nattes ou le matériau à l'épreuve des balles.

2. Construction en verre de sécurité selon la revendication 1, **caractérisée en ce que** la zone extérieure de la bande (1) qui déborde la vitre en verre feuilleté (3) est rabattue ou recourbée vers l'habitacle par régions en direction de la natte (5) ou du matériau à l'épreuve des balles des pièces de carrosserie (7) contiguës en bloquant l'ouverture de la vitre.

3. Construction en verre de sécurité selon la revendication 1, **caractérisée en ce que** la zone extérieure de la bande (1) qui déborde la vitre en verre feuilleté (3) ou la vitre extérieure (2) est rabattue ou recourbée en forme de Z par régions en direction de la natte (5) ou du matériau à l'épreuve des balles des pièces de carrosserie (7) contiguës tout en permettant l'ouverture de la vitre.

4. Construction en verre de sécurité selon l'une des revendications 1 à 3, **caractérisée en ce que** la bande est réalisée en acier blindé ou en céramique à l'épreuve des balles.

5. Construction en verre de sécurité selon l'une des revendications 1 à 4, **caractérisée en ce que** la bande (1) est destinée à être recouverte d'un revêtement (6).
